# EUROPÄISCHE PATENTSCHRIFT

(11) **EP 0 505 853 B1**
(45) Veröffentlichungstag und Bekanntmachung des Hinweises auf die Patenterteilung: **22.03.1995**
(21) Anmeldenummer: 92104369.1
(22) Anmeldetag: 13.03.1992
(51) Int. Cl.: B01D 53/52, B01D 53/86

(54) **Verfahren zur Vermeidung von H2S-Emissionen bei der katalytischen Autoabgasreinigung**
Process to prevent H2S emissions during the catalytic purification of automobile exhaust gases
Procédé pour éviter les émissions de H2S pendant l'épuration catalytique des effluents gazeux des automobiles

(30) Priorität: 27.03.1991 DE 4110054
(43) Veröffentlichungstag der Anmeldung: 30.09.1992
(73) Patentinhaber: Degussa Aktiengesellschaft, 60311 Frankfurt (DE)
(72) Erfinder: Domesle, Rainer, Dr., W-8755 Alzenau-Kälberau (DE); Engler, Bernd, Dr., W-6450 Hanau 9 (DE); Koberstein, Edgar, Dr., W-8755 Alzenau (DE)

(56) Entgegenhaltungen:
- EP-A- 0 315 402
- DE-A- 2 432 524
- DE-A- 3 815 554
- US-A- 3 998 599

## Beschreibung

Katalysatoren für die Entfernung der Schadstoffe CO, HC und NOₓ im Abgas von ottomotorbetriebenen Automobilen, insbesondere Katalysatoren mit hohen Ceroxidgehalten, erzeugen bei wechselndem Fahrbetrieb (Mager/Fett-Fahrweise) Intervalle unerwünschten Ausstoßes von Schwefelwasserstoff.

Unter oxidierenden Abgasbedingungen können Katalysatoren mit hohen Ceroxidgehalten Schwefeloxide binden. Beim Wechsel auf reduzierende Abgase während des Fahrbetriebs können die so gespeicherten Schwefeloxidmengen zum Teil als Schwefelwasserstoff wieder freigesetzt werden. Da Motorabgase aufgrund einer Verwendung von schwefelhaltigen Treibstoffen Schwefeldioxid enthalten können und der Abgaskatalysator je nach Fahrweise sowohl oxidierenden als auch reduzierenden Bedingungen ausgesetzt ist, kann bei Verwendung herkömmlicher Autoabgaskatalysatoren Schwefelwasserstoff emittiert werden. Die H₂S-Geruchsschwelle kann dabei kurzzeitig deutlich überschritten werden.

Die Entstehung des übelriechenden Gases kann zwar wie in EP-A-0 244 127 und EP-A-0 298 351 beschrieben bei Anwesenheit von Nickeloxid im Katalysator unterdrückt werden, jedoch reagiert im Katalysator enthaltenes Nickeloxid mit dem dort als Hauptkomponente eingesetzten Al₂O₃ nach Temperaturbeaufschlagung, wie sie schon bei normalem Fahrbetrieb auftritt, unter Spinellbildung (NiAl₂O₄) und verliert dabei die fähigkeit, den H₂S-Ausstoß zu unterbinden. Diesem offensichtlichen Mangel kann man zwar durch Zusatz sehr hoher Mengen von Nickeloxid bis zu einem gewissen Grade abhelfen, jedoch wirkt sich dies bei Einbringung des Nickeloxids in feinteiliger Form, zum Beispiel durch Imprägnieren, negativ auf die Leistungsfähigkeit des Katalysators hinsichtlich der Beseitigung der Schadstoffkomponenten HC, CO und NOₓ aus.

Statt in feinteiliger Form kann Nickeloxid oder dessen Vorläufer in Form vergleichsweise grober Partikel in den Katalysator eingebracht werden. Bei Monolithkatalysatoren verschlechtert sich aber dadurch die Haftung der dotierten Aluminiumoxid-Schicht auf dem keramischen oder metallischen Träger. Bei Katalysatoren in Schüttgutform (Pellets) scheidet die Verwendung von Nickeloxid wegen der Gefahr des Abriebs und des Einbringens toxischer Stäube in die Umwelt aus.

Alternative Verfahren, wie in DE-A-39 02 913 beschrieben, geben keine so weitgehende Unterdrückung der H₂S-Bildung wie die Anwendung von Nickeloxid in der Katalysatorbeschichtung. Werden anstelle von Nickeloxiden in der Beschichtung die ebenfalls sehr wirksamen Komponenten Kobaltoxid oder Zinkoxid nach DE-C-38 30 319 als Zusatz zur Beschichtung verwendet, so treten aufgrund der chemischen Verwandtschaft ebenfalls Spinellbildungen wie bei Nickeloxid auf. Die ebenfalls wirksamen Verbindungen des Kupfers und Silbers können als Zusatz zur Beschichtung zur Minderung der H₂S-Bildung keine Verwendung finden, da sie unter den reduzierenden Bedingungen im Abgas mit den Edelmetallen Platin, Rhodium und Palladium legieren und somit deren katalytische Aktivität zerstören.

Die Erfindung betrifft ein einfaches Verfahren zur Vermeidung von Schwefelwasserstoff-Emissionen bei der katalytischen Reinigung von Autoabgasen, das die beschriebenen Nachteile aus dem Stand der Technik nicht aufweist.

Das Verfahren ist dadurch gekennzeichnet, daß man das aus dem Katalysator der katalytischen Reinigung austretende Abgas durch einen gasdurchlässigen Körper aus metallischem Nickel oder mit Nickelbeschichtung leitet.

Bei dem Katalysator handelt es sich vorzugsweise um einen Dreiwegekatalysator, an dem der Umsatz von Kohlenmonoxid, Kohlenwasserstoffen und Stickoxiden gleichzeitig erfolgt. Jedoch ist das Verfahren auch bei Oxidationskatalysatoren, wie sie zum Beispiel an Magermotoren eingesetzt werden, anwendbar.

Der gasdurchlässige Körper aus metallischem Nickel und/oder Nickelbeschichtung wird abströmseitig vom Katalysator so angeordnet, daß die am Anbringungsort vorhandenen Abgastemperaturen noch ausreichen, um ein Abfangen von H₂S zu gewährleisten. Querschnitt und Struktur des gasdurchlässigen Körpers wird so gewählt, daß der Abgasdruck im Abgassystem nicht oder nur unwesentlich erhöht wird. Bevorzugt sind Querschnitte, die den Stirnflächenabmessungen des vorgeschalteten Katalysators entsprechen, so daß ein Miteinbau im Katalysatorgehäuse hinter dem Katalysator bewerkstelligt werden kann.

Ebenso ist es vorteilhaft, den gasdurchlässigen Körper aus metallischem Nickel und/oder Nickelbeschichtung in den Schalldämpfern unterzubringen. Dies erlaubt vor allem, die Temperaturlage des Körpers zur H₂S-Minderung den jeweiligen Bedingungen am Fahrzeug anzupassen.

Der gasdurchlässige Körper aus metallischem Nickel kann in zahlreichen Ausbildungen, wie als Drahtnetz, einem statistisch verknäulten Drahtgestrick, einem zu einer Scheibe gestauchten Drahtstrumpf oder einem geschäumten offenzelligen Formkörper vorliegen. Eine besonders günstige Ausführungsform stellt ein durch spiraliges Aufwickeln von glatter oder gewellter, gegebenenfalls auch nur gewellter Nickelfolie erhaltener Formkörper dar, der zu leichtem Einbau in Abgasanlagen mit einem Mantelrohr versehen sein kann. Auch Stapel von Folie, die durch geeignete konstruktive Maßnahmen gegen Verschieben mechanisch fixiert werden, sind erfindungsgemäß verwendbar.

Aus Gründen der Ökonomie und der Korrosionsbeständigkeit kann es zweckmäßig sein, statt gasdurchlässiger Körper aus metallischem Nickel solche aus anderen geeigneten temperaturbeständigem metallischen oder keramischen Material mit einer Nickelbeschichtung zu verwenden. Dabei können dieselben Körperformen wie bei den Körpern aus massivem Nickel eingesetzt werden.

Als Methoden zur Nickelbeschichtung bieten sich Plattieren, elektrolytische Abscheidung und alle weiteren üblichen Verfahren an. Auch Formlinge aus Keramik oder geeigneten anderen Metallen als Nickel mit einer Beschichtung von metallischem Nickel sind Bestandteil der Erfindung. Die Beschichtung mit den Metallen zur H₂S-Minderung kann vor oder nach Konfektionierung des Formkörpers erfolgen.

Eine andere vorteilhafte Ausführungsform des erfindungsgemäßen Verfahrens ist dadurch gekennzeichnet, daß in Kombination mit oder anstelle von Nickel Cobalt, Kupfer, Silber und/oder Zink verwendet wird. Wegen seines tiefen Schmelzpunktes ist Zink auf die Anwendung als Beschichtungsmaterial beschränkt.

Es ist auch möglich, statt der reinen Metalle Legierungen zu verwenden, die entweder eines oder mehrere der genannten Metalle mehrheitlich enthalten oder bei erhöhter Temperatur zum Seigern neigen und somit eines der genannten Metalle an der dem Abgas zugewandten Oberfläche aufkonzentrieren.

Gegenüber an sich wohl bekannten Schwefelwasserstoff-Fängern, wie Nickeloxid, Manganoxid, Eisenoxid, Zinkoxid und insbesondere Kupferoxid, welche als Formkörper in Patronen gefüllt oder in feinteiliger Form auf Monolithkatalysatoren, insbesondere in deren gegebenenfalls platinmetallfreien rückwärtigen Teil angeordnet werden müssen, erlaubt der erfindungsgemäße Einsatz von gasdurchlässigen Körpern aus den leicht form- und verarbeitbaren Metallen oder aus entsprechenden metallbeschichteten Körpern einfachste konstruktive Lösungen für die Anordnung bzw. Anbringung hinter Autoabgaskatalysatoren. Weiterhin wird bei den erfindungsgemäßen Ausführungsformen vermieden, daß beim Einsatz von NiO als Formkörper in Patronen oder als Beschichtung eines Trägers durch mechanische Belastung und/oder unzureichende Haftung der Beschichtung Abrieb mit einem Gehalt an dem ökologisch bedenklichen Übergangsmetall entsteht.

Die Verwendung von gasdurchlässigen Formkörpern aus metallischem Nickel oder mit Nickelbeschichtung stellt somit unter umwelthygienischen Gesichtspunkten eine hervorragende Problemlösung dar.

Wie die folgenden Beispiele zeigen, kann mit Hilfe der Erfindung der Ausstoß von H₂S aus mit Abgasreinigungskatalysatoren ausgerüsteten Ottomotoren in die Umwelt nachhaltig vermieden werden.

### Vergleichsbeispiel 1

Ein wabenförmiger Katalysatorträger mit 1,3 dm³ Volumen und einer Zelldichte von 62 Zellen/cm² wurde durch Eintauchen in eine wässrige Suspension aus γ-Al₂O₃ und Cernitrat und nachfolgendes Trocknen und Tempern bei 500 °C mit einer Oxidschicht belegt. Das verwendete γ-Aluminiumoxid wies eine spezifische Oberfläche von 200 m²/g auf. Diese Katalysatorvorstufe wurde mit H₂PtCl₆ und RhCl₃ imprägniert, getrocknet und 2h bei 500 ° C im Formiergasstrom (N₂:H₂=95:5) reduziert. Der fertige Katalysator enthielt 156 g Al₂O₃, 63 g CeO₂, 1,50 g Platin und 0,30 g Rhodium. Eine zylindrische Probe dieses Katalysators mit 25 mm Durchmesser und 56 mm Länge wurde anschließend dem anwendungstechnischen Test unterworfen.

### Beispiel 1

Aus einer Scheibe aus Nickelschaum mit 20 ppi wurde ein zylindrischer Körper mit 25 mm Durchmesser ausgebohrt. Dieser Körper mit einer Gesamtlänge von 45 mm wurde einer Katalysatorprobe gemäß Vergleichsbeispiel 1 nachgeordnet.

### Beispiel 2

Eine glatte und eine gewellte Folie von hochtemperaturfestem, ferritischem Stahl mit Al und Cr als wesentlichen Legierungsbestandteilen wurden mit einem Nickelüberzug versehen. Die mittlere Schichtdicke der Nickelbeschichtung betrug 20 »m. Anschließend wurde durch spiraliges Aufwickeln der glatten und der gewellten Folie ein Wabenkörper geformt. Der Wabenkörper aus gewickelter Metallfolie mit 25 mm Durchmesser, 50 mm Länge und einer Zelldichte von 62 Zellen/cm² wurde einer Katalysatorprobe gemäß Vergleichsbeispiel 1 bei der anwendungstechnischen Prüfung nachgeordnet.

### Beispiel 3

Aus flach gewalztem Kupferdraht mit ca. 1 mm Breite wurde ein Preßling mit den Abmessungen 25 x 50 mm geformt. Dieser wurde einer Katalysatorprobe (nach Vergleichsbeispiel) nachgeschaltet und die H₂S-Emission der Anordnung geprüft.

### Anwendungstechnische Prüfung

Der herkömmliche Katalysator von Vergleichsbeispiel 1 und die Katalysatorkombinationen der Beispiele 1 bis 3, bestehend aus einem Katalysator nach Vergleichsbeispiel 1 und dem jeweils nachgeschalteten Formkörpern aus Nickel oder Kupfer oder entsprechend beschichteten Trägern, wurden nacheinander in einem Reaktor bei einer Abgastemperatur von 500 °C und einem Gasdurchfluß von 1.850 l_{N}/h zunächst für 1 Stunde einem mageren Gasgemisch I entsprechend einem λ-Wert von 1,004 ausgesetzt. Die genaue Abgaszusammensetzung ist der Tabelle 1 zu entnehmen. Während dieser Testphase unter oxidierenden Bedingungen wurde das im Abgas enthaltene Schwefeloxid jeweils im vorgeschalteten herkömmlichen Katalysator gespeichert.

Nach dieser Speicherphase wurde auf das fette Gasgemisch II entsprechend einem λ-Wert von 0.88 umgeschaltet und die Konzentration des H₂S im Abgas mit Hilfe des Methylenblau-Verfahrens bestimmt. Dazu wurde zunächst für 2 Minuten eine definierte Gasmenge (5l/min) durch eine Waschflasche mit 50 ml Absorptionslösung (Reagenz 1 aus Tabelle 2) geleitet. Dann wurde die Absorptionslösung in der Waschflasche nacheinander mit 10 ml Reagenz 2 und 6 ml Reagenz 3 versetzt, in einen Meßkolben überführt und bis zu einer Marke mit destilliertem Wasser aufgefüllt.

Nach einer Standzeit von mindestens 15 min wurde die Lösung in einer 1 cm Küvette bei 667 nm gegen einen Blindwert photometriert und die H₂S-Konzentration aus einer Eichkurve abgelesen.

Nach der H₂S-Probennahme wurde die Konversion der Schadstoffe CO, HC und NOₓ bestimmt.

**Tabelle 1**

| Gasgemische | | |
|---|---|---|
| Gaskomponente | Gasgemisch I (mager; λ=1,004) | Gasgemisch II (fett; λ=0,88) |
| CO | 0,74 vol % | 4,60 vol % |
| H₂ | 0,25 vol % | 1,53 vol % |
| O₂ | 0,83 vol % | 0,37 vol % |
| HC (Propen/Propan 2/1) | 650 ppm | 650 ppm |
| NO | 1550 ppm | 1550 ppm |
| SO₂ | 20 ppm | 20 ppm |
| CO₂ | 10 vol % | 10 vol % |
| H₂O | 10 vol % | 10 vol % |
| N₂ | 77,9 vol % | 73,2 vol % |

**Tabelle 2**

| Verwendete Reagenzien zur Bestimmung der H₂S-Konzentration im Abgas nach dem Methylenblau-Verfahren. | |
|---|---|
| Reagenz 1 | 5,5 Gew.-% Zinkacetat + 1,4 Gew.-% Natriumacetat + 4 Gew.-% Glycerin in Wasser |
| Reagenz 2 | 1 Gew.-% DMD (N,N-Dimethyl-p-phenylendiamin) in 3,5 m Schwefelsäure |
| Reagenz 3 | 12 Gew.-% Ammoniumeisen(III)sulfat in 0,5 m Schwefelsäure |

Die Ergebnisse der anwendungstechnischen Prüfung sind in der Tabelle 3 zusammengefaßt:

**Tabelle 3**

| Ergebnisse der Anwendungstests | | | | |
|---|---|---|---|---|
| | H₂S-Emission mg H₂S/m³ | Konversion λ=0,88 [%] | | |
| | | CO | HC | NOₓ |
| Vergleichsbeispiel 1 | 342 | 51 | 42 | 99 |
| Beispiel 1 | 62 | 52 | 43 | 99 |
| Beispiel 2 | 75 | 48 | 41 | 99 |
| Beispiel 3 | 71 | 53 | 42 | 99 |

Die Beispiele zeigen, daß durch die erfindungsgemäße Nachschaltung von Formkörpern aus geeigneten Metallen oder mit Beschichtungen dieser Metalle hinter konventionelle Katalysatoren die H₂S-Emission dieser Katalysatoren sehr stark vermindert werden kann. Die mit dem erfindungsgemäßen Verfahren erzielte Reduktion der H₂S-Emission erzeugt beim Einsatz am Fahrzeug keine Geruchsbelästigung mehr.

## Patentansprüche

1. Verfahren zur Vermeidung von Schwefelwasserstoff-Emissionen bei der katalytischen Reinigung von Autoabgasen,
**dadurch gekennzeichnet,**
daß man die aus dem Katalysator der katalytischen Reinigung austretenden Abgase durch einen gasdurchlässigen Körper aus metallischem Nickel oder mit Nickelbeschichtung leitet.

2. Verfahren nach Anspruch 1,
**dadurch gekennzeichnet,**
daß der gasdurchlässige Körper aus metallischem Nickel aus Drahtnetz, einem Drahtgestrickknäuel, einem geschäumten offenzelligen Formkörper, einem offenzelligen Metallschaum oder einer wabenförmigen Folienstruktur besteht.

3. Verfahren nach Anspruch 1,
**dadurch gekennzeichnet,**
daß der gasdurchlässige Körper mit Nickelbeschichtung aus einem mit diesem Metall beschichteten Drahtnetz, Drahtgestrickknäuel, geschäumten offenzelligen Formkörper, offenzelligen Metallschaum oder einer wabenförmigen bzw. monolithischen Struktur aus Metall oder Keramik besteht.

4. Verfahren nach den Ansprüchen 1, 2 oder 3,
**dadurch gekennzeichnet,**
daß in Kombination mit oder anstelle von Nickel Cobalt, Kupfer, Silber und/oder Zink verwendet wird, wobei Zink nur als Beschichtungsmaterial verwendet wird.

## Claims

1. A process for avoiding emissions of hydrogen sulfide in catalytic emission control, characterized in that the exhaust gases issuing from the catalytic emission control catalyst are passed through a gas-permeable body of, or coated with, metallic nickel.

2. A process as claimed in claim 1, characterized in that the gas-permeable body of metallic nickel consists of wire gauze, a knitted wire ball, a foamed open-cell molding, an open-cell metal foam or a honeycomb foil structure.

3. A process as claimed in claim 1, characterized in that the gas-permeable body with a nickel coating consists of a nickel-coated wire gauze, knitted wire ball, foamed open-cell molding, open-cell metal foam or honeycomb or monolithic structure of metal or ceramic.

4. A process as claimed in claim 1, 2 or 3, characterized in that cobalt, copper, silver and/or zinc is used in combination with or instead of nickel, zinc only being used as a coating material.

## Revendications

1. Procédé pour éviter les émissions d'hydrogène sulfuré lors de la purification catalytique des gaz d'échappement des autos, caractérisé en ce que l'on conduit les gaz d'échappement qui sortent du catalyseur de la purification catalytique, à traver un solide perméable aux gaz en nickel métallique ou avec un recouvrement de nickel.

2. Procédé selon la revendication 1, caractérisé en ce que le solide perméable aux gaz est formé de nickel métallique en treillis de fil métallique en une pelote de fils métallique, en un solide de moulage à cellules ouvertes, moussé, en une mousse de métal à cellules ouvertes, ou en une structure de feuilles en forme de nid d'abeilles.

3. Procédé selon la revendication 1, caractérisé en ce que le solide perméable aux gaz ayant un recouvrement en nickel consiste en un réseau de fils recouvert de ce métal, en des pelotes de fils métalliques, en des corps de moulage à cellules ouvertes, moussés, en de la mousse de métal à cellules ouvertes ou en une structure en forme de nids d'abeilles, ou monolithique en métal ou en céramique.

4. Procédé selon les revendications 1, 2 ou 3, caractérisé en ce que l'on utilise en combinaison avec ou à la place du nickel, du cobalt, du cuivre, de l'argent et/ou du zinc, le zinc étant utilisé seulement comme recouvrement.
